# EUROPÄISCHE PATENTSCHRIFT

(11) **EP 2 852 480 B1**
(45) Veröffentlichungstag und Bekanntmachung des Hinweises auf die Patenterteilung: **11.10.2017**
(21) Anmeldenummer: 13721909.3
(22) Anmeldetag: 02.05.2013
(51) Int. Cl.: B29B 9/06, B29B 9/14, B29B 9/16, B29C 47/36, B01J 2/00, B01J 2/20, C08J 3/12, B29C 47/00, B29K 311/14

(54) **VERFAHREN UND VORRICHTUNG ZUR HERSTELLUNG EINES HOLZ-KUNSTSTOFF-VERBUNDWERKSTOFFS**
METHOD AND DEVICE FOR MANUFACTURING A WOOD-PLASTIC-COMPOSIT (WPC)
PROCÉDÉ ET DISPOSITIF DE FABRICATION D'UN COMPOSITE BOIS-PLASTIQUE (CBP)

(30) Priorität: 22.05.2012 DE 102012104375
(43) Veröffentlichungstag der Anmeldung: 01.04.2015
(73) Patentinhaber: REHAU AG + Co, 95111 Rehau (DE)
(72) Erfinder: ZODL, Harald, A-2860 Kirchschlag (AT); KUSKE, Nico, 95126 Schwarzenbach/Saale (DE)
(86) Internationale Anmeldenummer: PCT/EP2013/001287
(87) Internationale Veröffentlichungsnummer: WO 2013/174473

(56) Entgegenhaltungen:
- EP-A2- 1 782 932
- WO-A1-02/22335
- WO-A1-03/076147
- WO-A1-2008/098274
- DE-A1- 1 653 263
- DE-A1-102007 057 907
- DE-A1-102010 034 855
- JP-U- 3 085 676
- US-A1- 2012 088 853

## Beschreibung

Die Erfindung betrifft ein Verfahren zur Herstellung eines Holz-Polymer-Verbundwerkstoffs. Gegenstand der Erfindung ist ferner eine Vorrichtung zur Holz-Polymer-Verbundwerkstoff-Herstellung. Holz-Polymer-Verbundwerkstoffe bzw. Wood-Plastic-Composites (abgekürzt WPC) sind thermoplastisch verarbeitbare Verbundwerkstoffe, die aus unterschiedlichen Anteilen von Holz (typischerweise Holzmehl), thermoplastischen Kunststoffen und ggf. Additiven hergestellt werden. Verarbeitet werden sie meist mit modernen Verfahren der Kunststofftechnik wie Extrusion, Spritzgießen, Rotationsguss oder mittels Presstechniken, aber auch im Thermoformverfahren. Vorzugsweise wird WPC insbesondere zur Herstellung von Decking, insbesondere Terrassendielen, verarbeitet. Die DE 20 2006 007 792 U1 offenbart verschiedene Verarbeitungsmöglichkeiten für WPC-Materialien.

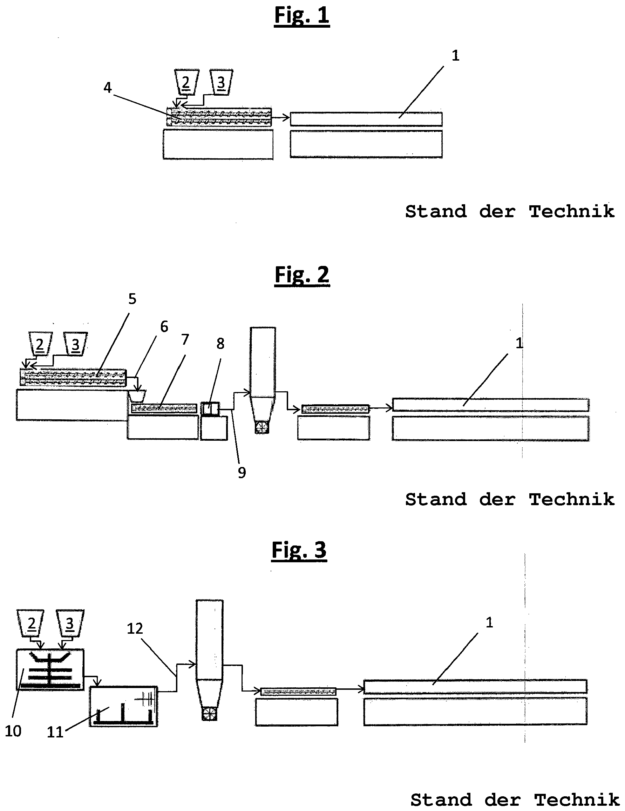

Zur Herstellung einer homogenen Mischung von Holzpartikeln und Polymermaterial sowie ggf. von Additiven ist eine Compoundierung erforderlich. Gemäß dem Stand der Technik werden hierzu unterschiedliche Verfahren eingesetzt:
Ein in der Praxis gängiges Verfahren ist der Einstufenprozess, auch Direktextrusion genannt. Hierbei werden Holzpartikel und Kunststoffgranulat als Rohware gleichzeitig dem Extruder zugeführt. Der Kunststoff wird im Extruder durch die entstehende Reibungswärme aufgeschmolzen. Das Gemenge aus Holzpartikeln und Polymermaterial wird intensiv vermischt und durch das Werkzeug zu einem Profil extrudiert. Hierbei dürfen die im Extruder eingebrachten Holzpartikel eine bestimmte Feuchtigkeitsobergrenze jedoch nicht überschreiten. Während des Extrusionsprozesses wird Feuchtigkeit, welche aus den Holzpartikeln entweicht, abgesaugt, so dass die WPC-Masse beim Verlassen des Werkzeuges Feuchtigkeiten von in der Regel von unter 1 % aufweist. Entsprechend sind diesem Verfahren Grenzen gesetzt, sofern vergleichsweise feuchte Holzpartikel eingesetzt werden. Für die Direktextrusion werden konische, gegenläufige Doppelschneckenextruder eingesetzt, die die Aufgabe des intensiven Mischens und des erforderlichen Druckaufbaus für das Extrudieren eines Profils gleichzeitig erfüllen. Das Verfahren kommt bei der Herstellung von Terrassendielen vergleichsweise häufig zum Einsatz und ist in der Figur 1 schematisch dargestellt.

Sehr häufig werden auch zweistufige Verfahren eingesetzt, bei denen zunächst silofähiges WPC-Granulat hergestellt wird, welches in einem zweiten Schritt zu einem WPC-Profil extrudiert wird. Zur Herstellung von silofähigem WPC-Granulat haben sich wiederum unterschiedliche Verfahren etabliert. Bei einem dieser Verfahren werden zum Mischen und Kompaktieren der Rohmaterialien (also thermoplastischem Polymermaterial, Holzpartikel und Additive) gleichlaufende, parallele Doppelschneckenextruder eingesetzt. Diese als Compounder bezeichneten Doppelschneckenextruder arbeiten kontinuierlich und erzeugen eine sehr homogene Mischung, können aber nicht genügend Druck für eine Profilextrusion aufbauen. Die Verweilzeit im Compounder beträgt wenige Minuten und ist nur in relativ engen Grenzen variierbar. Der erhaltene Holz-Polymer-Verbundwerkstoff wird in der Schmelzephase üblicherweise in ein nachgeschaltetes Extrusionsaggregat, z.B. einen Einschneckenextruder, gegeben. Unmittelbar nach dem Austritt aus der Einschnecke erfolgt ein Granulierungsschritt, in dem silofähiges WPC-Granulat erzeugt wird. Ein solches Verfahren gemäß dem Stand der Technik ist in der Figur 2 dargestellt. Bei der beschriebenen Compoundierung stellen Feuchtigkeitsschwankungen der eingesetzten Roh-Holzpartikel ein großes Problem dar, da diese Schwankungen unterschiedliche Produktqualitäten des Compounds hinsichtlich Homogenisierung und Schmelzefluss zur Folge haben. Auch eine Mehrfachentgasung kann dieses Problem nur bedingt lösen. Grundsätzlich ist der Compoundierprozess daher sehr sensibel hinsichtlich Schwankungen des Feuchtigkeitsgehalts in den Holzpartikeln. Die Prozessruhe des nachfolgenden Profil-Extrusionsprozesses ist daher stark abhängig von den Rohstoffeigenschaften.

Ein weiteres gängiges Verfahren zur Herstellung von silofähigem WPC-Granulat ist der Einsatz von so genannten Heiz-Kühl-Mischern. In Figur 3 ist ein derartiges Verfahren gemäß dem Stand der Technik schematisch dargestellt. Heiz-Kühl-Mischer arbeiten in der Regel diskontinuierlich. Im Heizmischer werden Holzpartikel und Polymermaterial gemischt und bis zum Schmelzpunkt des Thermoplasts aufgeheizt. Die Verweilzeiten im Heizmischer sind in der Regel deutlich länger als im zuvor beschriebenen Compounder. Durch die erzeugte Reibungswärme schmilzt das Thermoplastmaterial und benetzt daraufhin die Holzpartikel, so dass eine homogene WPC-Mischung entsteht. Diese Mischung wird in einen Kühlmischer überführt und hierbei abgekühlt. Die sich bildenden groben Agglomerate werden durch Einsatz von Zerhackern in kleinere Stücke aufgebrochen. Das WPC-Zwischenprodukt ist ein trockenes, nicht verdichtetes Granulat mit unregelmäßiger Kornform. Dieses ist zwar grundsätzlich silofähig, jedoch aufgrund der geringen Dichte und der Unregelmäßigkeiten des Granulats mit der Problematik eines großen Volumenbedarfs im Silo behaftet. Die unregelmäßig geformten Granulatteilchen geringer Dichte beeinflussen auch die Stabilität und Ruhe des nachfolgenden Profilextrusionsprozesses negativ.

Die WO 03/076147 A1 beschreibt ein Verfahren sowie eine Vorrichtung zum Herstellen eines thermoplastischen Naturfaserprodukts. In der EP 1 782 932 ist ein Verfahren sowie eine Vorrichtung zur Herstellung von mit einem Thermoplast umhüllten Holzteilchen beschrieben. Vor dem beschriebenen Hintergrund liegt der Erfindung die Aufgabe zugrunde, ein Verfahren und eine Vorrichtung zur Herstellung eines Holz-Polymer-Verbundwerkstoffs anzugeben, welches weitgehend unabhängig von Schwankungen in den Rohstoffeigenschaften eine ruhige und stabile Profilextrusion ermöglicht.

Erfindungsgemäß wird die Aufgabe gelöst durch ein Verfahren mit den Merkmalen des Patentanspruchs 1. Weitere bevorzugte Merkmale sind in den abhängigen Verfahrensansprüchen beansprucht.

Die Erfindung greift den im Stand der Technik bekannten Einsatz eines Heizmischers zur Homogenisierung von Holzpartikeln und Polymermaterial auf. Im Gegensatz zum Stand der Technik erfolgt jedoch zumindest im Regelbetrieb keine dem Heizmischer nachgeschaltete Kühlung des Gutes in einem Kühlmischer, sondern die im Heizmischer in die Mischung eingebrachte Prozesswärme wird erfindungsgemäß im nachfolgenden Granulierungsschritt genutzt. Erfindungswesentlich ist, dass die Prozessführung im Heizmischer auf den Feuchtigkeitsgehalt der zugeführten Roh-Holzpartikel abgestimmt ist. Dies kann beispielsweise mittels einer Regelung oder aber auch einer Steuerung des Heizmischers erfolgen. Sofern sehr feuchte Holzpartikel verarbeitet werden müssen, kann beispielsweise der Heizmischprozess entsprechend lange durchgeführt werden, um eine ausreichende Entfeuchtung der Holzpartikel sicherzustellen. Alternativ oder aber auch ergänzend zu einer Variation der Verweildauer kann auch die Mischintensität in Abhängigkeit des Feuchtigkeitsgehaltes der eingebrachten Holzpartikel eingestellt werden. Bei einem rotierenden Mischaggregat kann dies beispielsweise über eine entsprechende Einstellung der Rotationsgeschwindigkeit bzw. der Antriebsleistung des Mischaggregates erfolgen. Alternativ oder ergänzend hierzu kann aber auch die axiale Position des Mischaggregates bzw. die Anzahl der Mischerflügel verändert werden. Hierdurch können unterschiedliche Strömungsverhältnisse im Heizmischer mit unterschiedlichen Mischungseffekten realisiert werden. Die aus dem Heizmischer austretende Rohmischung weist entsprechend einen Feuchtigkeitsgehalt der darin enthaltenen Holzpartikel innerhalb eines vordefinierten, vergleichsweise engen Bereiches auf, wodurch eine sehr große Prozessruhe und -stabilität des nachfolgenden Profil-Extrusionsprozesses gewährleistet ist. Zweckmäßigerweise liegt der Feuchtigkeitsgehalt der Holzpartikel beim Verlassen des Heizmischers in einem Bereich von 0 bis 20, vorzugsweise 0 bis 10 g Wasser/kg feuchtes Holz. Die weitere Entfeuchtung der Holzpartikel im Profil-Extrusionsprozess ist somit nur geringfügig ausgeprägt, bzw. aufgrund des bekannten Feuchtigkeitsgehalts gut kalkulier- und kontrollierbar. Generell liegt es auch im Rahmen der Erfindung, den Prozess im Heizmischer derart fest einzustellen, dass in jedem Fall in den aus dem Heizmischer austretenden Holzpartikeln in der Rohmischung ein ausreichend niedriger Feuchtigkeitsgehalt von z.B. maximal 10 g Wasser / kg feuchtes Holz sichergestellt ist. Hierbei wird vom ungünstigsten Fall höchster Feuchtigkeitsbeladung in den Roh-Holzpartikeln ausgegangen, z.B. 100 g Wasser / kg feuchtes Holz. Der Prozess wird dann so geführt, dass auch bei dieser Maximalbeladung der geforderte Feuchtigkeitsgehalt von max. 1% in der Rohmischung sichergestellt ist, und zwar unabhängig von der ggf. niedrigeren tatsächlichen Feuchtigkeitsbeladung der Roh-Holzpartikel.

Nach dem Verlassen des Heizmischers durchläuft die Rohmischung einen Zwischenbehälter, der als Kühlmischer mit elektrischem Kühlaggregat, tankförmigem Kühlmischbehälter sowie darin angeordnetem, elektrisch angetriebenen Mischaggregat ausgebildet ist und dessen Kühlaggregat nur bei Eintritt einer Notsituation zur Vermeidung von Havarien genutzt wird, während der Kühlmischer im Normalbetrieb bei ausgeschaltetem Kühlaggregat lediglich als Puffer fungiert.

Das erfindungsgemäße Verfahren ist äußerst robust und stellt auch bei schwankendem Feuchtigkeitsgehalt der Roh-Holzpartikel eine konstante Feuchtigkeit der Rohmischung bzw. des erzeugten Granulats sicher. Als eingesetztes Polymermaterial können grundsätzlich alle Thermoplaste zum Einsatz kommen, vorzugsweise Polyolefine, insbesondere Polypropylen. Erfindungsgemäss wird die Rohmischung vor der in einem Schneidverdichter zerkleinert. Schneidverdichter sind im Stand der Technik bekannt und beispielsweise in den Druckschriften DE 2008 018 151 U1 oder aber auch der WO 00/74912 A1 beschrieben. Im Schneidverdichter werden die aus dem Heizmischer austretenden Agglomerate der Rohmischung verkleinert und zu einer sehr homogene Korngröße weiterverarbeitet. Darüber hinaus findet im Schneidverdichter eine gewünschte Verdichtung der Agglomerate statt, so dass neben einer Homogenisierung in der Korngröße zusätzlich auch eine vergleichsweise hohe Dichte der erzeugten Holz-Polymer-Verbundwerkstoffs sichergestellt ist. Damit wird ein weiterer Nachteil der bekannten Kombination von Heiz- und Kühlmischer beseitigt. Zweckmäßigerweise wird zur Granulierung die Rohmischung, vorzugsweise in einem Extruder, aufgeschmolzen und unter Wasser oder als Heißabschlag granuliert. Die hierzu eingesetzten Granulatoren sind Werkzeugmaschinen, mit denen aus Strängen oder größeren Stücken durch Zerteilen Teilchen im üblicherweise Millimeter-Größenbereich hergestellt werden. Das hergestellte Granulat lässt sich gut handhaben, z. B. Absacken, Schaufeln und Fließfördern, und auch entsprechend in einem Silo lagern. Die erfindungsgemäß bevorzugte Granulierung in einem Unterwassergranulator bedeutet, dass die Granulate unter Wasser geschnitten werden. Dies geschieht in der Regel mit rotierenden, auf Hartmetallscheiben laufenden Messerköpfen. Die Scheiben weisen Löcher auf, die die Grundgröße bestimmen. Die Feinregulierung der Form, des Gewichts und weiterer Parameter lässt sich durch Drehzahl, Materialdurchsatz und Temperaturen an diesem System von außen steuern. Das erfindungsgemäß hergestellte Granulat hat zweckmäßigerweise eine mittlere Korngröße von wenigen Millimetern, beispielsweise 2 bis 12 mm, vorzugsweise 3 bis 8 mm und kann zylinderförmig ausgebildet sein, z.B. mit einem Durchmesser von 2 bis 6 mm und einer Länge von 8 bis 12 mm. Bei einer ebenfalls im Rahmen der Erfindung liegenden Wasserringgranulierung kommt das Kühl- und Transportmedium Wasser mit der gelochten Platte nicht in Kontakt. Vorzugsweise schneiden die umlaufenden Messer die Schmelzestränge und schleudern die noch schmelzeförmigen Granulate in den umlaufenden Wasserring.

Anschließend an die Granulierung wird das Granulat zweckmäßigerweise gekühlt und danach in ein Lagersilo eingefüllt. Von dort aus kann es zur eigentlichen Profil-Extrusionsstrecke gefördert werden. Wie bereits beschrieben, gewährleistet das erfindungsgemäße Verfahren einen sehr niedrigen Feuchtigkeitsgehalt der Holzpartikel im Holz-Polymer-Verbundwerkstoff-Granulat unabhängig von der Feuchtigkeitsbeladung der Roh-Holzpartikel. Andererseits wird durch den Schneidverdichter eine homogene Korngröße und eine hohe Dichte des WPC-Granulats sichergestellt. Insgesamt ermöglicht das erfindungsgemäße Verfahren im Ergebnis einen sehr ruhig und stabil laufenden Profil-Extrusionsprozess mit wesentlich größerem Toleranzfenster hinsichtlich der Feuchtigkeit der eingesetzten Roh-Holzpartikel, welche bis zu 10%, ggf. auch mehr betragen kann.

Zweckmäßigerweise wird die im Heizmischer zugeführte Wärme allein durch die beim Mischen erzeugte Reibungswärme bereitgestellt. Alternativ hierzu ist es jedoch auch möglich, durch ein entsprechendes Aggregat (z. B. einen Heizmantel) zusätzliche Wärme von außen in die Rohmischung einzubringen. Der Heizmischer weist zweckmäßigerweise einen tankförmigen Mischbehälter sowie mindestens ein im Mischbehälter angeordnetes, elektrisch angetriebenes rotierendes Mischaggregat auf. In der Regel handelt es sich hier um eine Welle mit daran angeordneten, vorzugsweise axial variabel positionierbaren Mischflügeln. Entsprechend kann über eine Einstellung der Drehzahl bzw. Antriebsleistung des Mischaggregates die Mischintensität eingestellt werden. Darüber hinaus kann alternativ oder ergänzend durch eine entsprechende axiale Verschiebung der Mischerflügel innerhalb des Mischbehälters die Mischintensität verändert werden, da die axiale Position der Mischerflügel die Strömungsverhältnisse im Mischbehälter beeinflusst.

Der Schneidverdichter weist erfindungsgemäß einen tankförmigen Behälter sowie mindestens ein im Behälter angeordnetes, elektrisch angetriebenes Schneidwerkzeug auf. Dieses Schneidwerkzeug kann um eine, vorzugsweise vertikal ausgerichtete, Achse rotieren. Das Schneidwerkzeug weist zweckmäßigerweise eine, vorzugsweise gekrümmte oder abgewinkelte, Schneidkante auf. Durch den erfindungsgemäßen Einsatz eines Schneidverdichters wird gleichzeitig eine Homogenisierung der Partikelgröße und eine Verdichtung des Rohmischungs-Agglomerates bewirkt. Nach dem Aufschmelzen in der Einschnecke wird über die beschriebene Granuliereinheit ein Granulat erzeugt, welches sehr geringe Schwankungen im Schüttgewicht aufweist und die für den Extrusionsprozess notwendige Riesel- und Dosierfähigkeit liefert, wobei alle genannten Effekte wichtig hinsichtlich der gewünschten Prozessruhe und Prozessstabilität des Profil-Extrusionsprozesses sind.

Grundsätzlich kann die erfindungsgemäße Herstellung des Holz-Polymer-Verbundwerkstoffs in einem kontinuierlichen Verfahren oder alternativ auch batchweise erfolgen. Der Betrieb des Heizmischers erfolgt aufgrund der erforderlichen Aufheizzeitdauer üblicherweise batchweise, während der Schneidverdichter ohne Weiteres sowohl batchweise als auch kontinuierlich betrieben werden kann.

Gegenstand der Erfindung ist auch eine Vorrichtung zur Herstellung eines Holz-Polymer-Verbundwerkstoffs gemäß dem unabhängigen Anspruch 10; weitere Vorrichtungsmerkmale sind Gegenstand der davon abhängigen Vorrichtungsansprüche. Im Folgenden wird der Stand der Technik sowie die Erfindung anhand einer lediglich ein Ausführungsbeispiel darstellenden Zeichnung ausführlich erläutert. Es zeigen schematisch:
- Fig. 1: ein Direkt-Extrusionsverfahren zur Herstellung von WPC-Profilen gemäß dem Stand der Technik,
- Fig. 2: ein zweistufiges Verfahren zur Herstellung eines WPC-Extrusionsprofils gemäß dem Stand der Technik,
- Fig. 3: ein weiteres zweistufiges WPC-Profilherstellungsverfahren gemäß dem Stand der Technik,
- Fig. 4: ein erfindungsgemäßes Verfahren zur Herstellung von WPC-Profilen (2-stufig) und
- Fig. 5: den in Figur dargestellten Schneidverdichter in einer Einzelansicht von oben.

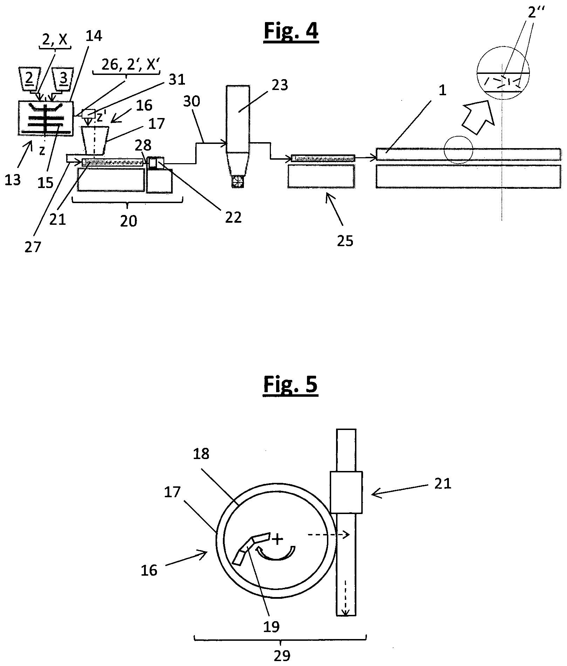

Bei den in den Figuren 1 bis 4 beschriebenen Verfahren zur Herstellung eines WPC-Extrusionsprofils 1 werden als Rohmaterial jeweils mit Feuchtigkeit beladene Holzpartikel 2 sowie ein Polymermaterial 3, welches in Granulatform vorliegt, verwendet. In den Ausführungsbeispielen wird jeweils Polypropylen als Polymermaterial 3 eingesetzt. Zusätzlich zu den Komponenten Holzpartikel 2 und Polymermaterial 3 werden nicht näher dargestellte Additive eingesetzt, welche hinsichtlich der Produkteigenschaften des hergestellten WPC-Extrusionsprofils 1 von Bedeutung sind, Der Gewichtsanteil der Holzpartikel 2" im fertigen WPC-Extrusionsprofil 1 (vergl. vergrößerten Ausschnitt in Fig. 4) beträgt üblicherweise 40 bis 60 %. Die hergestellten WPC-Extrudate 1 sind als Hohlkammerprofile (oder auch als Vollprofile) ausgebildet und werden vorzugsweise als Terrassendielen eingesetzt.

Bei dem in Figur 1 nach dem Stand der Technik dargestellten Verfahren erfolgt eine so genannte Direktextrusion. Hierbei werden die Rohstoffe Holzpartikel 2 und Polymermaterial 3 mittels eines gegenläufigen Doppelschneckenextruders 4 in einem einzigen Schritt zu einem fertigen Extrusionsprofil 1 verarbeitet. Der Doppelschneckenextruder 4 erfüllt gleichzeitig die Aufgabe eines intensiven Mischens von Holzpartikeln 2 und Polymermaterial 3 und leistet darüber hinaus den erforderlichen Druckaufbau für die Profilextrusion. Nachteilig bei dem in Figur 1 dargestellten Verfahren ist die Erfordernis von vergleichsweise trockenen Holzpartikeln 2 als Rohware, da im Doppelschneckenextruder 4 nur sehr bedingt die Möglichkeit einer Entfeuchtung besteht. Der Feuchtigkeitsgehalt der Holzpartikel 2" im fertigen Extrusionsprofil 1 darf jedoch einen Grenzwert von 10 g Wasser / kg feuchtes Holz nicht überschreiten. Darüber hinaus ist der Profilextrusionsprozess sehr sensibel hinsichtlich Schwankungen des Feuchtigkeitsgehaltes der Roh-Holzpartikel 2, da die Verweilzeit und damit die Entfeuchtung der Holzpartikel 2 im Doppelschneckenextruder 4 nur bedingt variiert werden kann.

Bei dem in Figur 2 nach dem Stand der Technik zweistufigen Verfahren erfolgt zunächst Einbringung der Rohmaterialien 2, 3 in einen Compounder 5, welcher als gleichlaufender, paralleler Doppelschneckenextruder oder alternativ als Planetwalzenextruder ausgebildet ist. Dieser arbeitet kontinuierlich und erzeugt eine sehr homogene Mischung. Er ist jedoch nicht in der Lage, genügend Druck für eine Profilextrusion aufzubauen. Die Verweilzeit im Compounder 5 beträgt wenige Minuten und ist nur in geringem Maße variierbar. Das aus dem Compounder 5 austretende Holz-Polymer-Verbundwerkstoff 6 wird anschließend in der Schmelzephase in ein Extrusionsaggregat 7 in Form eines Einschneckenextruders gegeben. Hieran schließt sich eine Pelletierung 8 (oder alternativ eine Granulierung) an, sodass am Ende der ersten Stufe des Prozesses silofähige Holz-Polymer-Verbundwerkstoff-Pellets 9 vorliegen. Problematisch ist bei diesem Verfahren - analog zu der in Figur 1 beschriebenen Technik - die hohe Sensibilität des Prozesses gegenüber Feuchtigkeitsschwankungen in den Roh-Holzpartikeln 2. Auch eine Mehrfachentgasung kann dieses Problem nur bedingt lösen.

Bei dem in Figur 3 beschriebenen Verfahren gemäß dem Stand der Technik werden die Holzpartikel 2 und das Polymermaterial 3 zunächst in einen Heizmischer 10 gegeben. Hierbei werden der Kunststoff 3 aufgeschmolzen und die Rohstoffe 2, 3 homogenisiert. Danach wird die erhaltene Mischung in einem Kühlmischer 11 zu einem Agglomerat 12 abgekühlt und zerkleinert. Dieses Agglomerat 12 hat jedoch eine sehr stark schwankende Korngröße sowie eine geringe Schüttdichte. Beide Faktoren wirken sich nachteilig auf die Silofähigkeit des Holz-Polymer-Verbundwerkstoffs 12 aus und sind auch insbesondere hinsichtlich der Ruhe und Stabilität des anschließenden Profilextrusionsprozesses sehr nachteilig.

Ein erfindungsgemäßes Verfahren zur Herstellung eines Holz-Polymer-Verbundwerkstoffs ist in Figur 4 dargestellt. Die in Figur 4 dargestellte Vorrichtung weist einen Heizmischer 13 mit tankförmigem Mischbehälter 14 sowie darin angeordnetem Mischaggregat 15 auf. Dieses Mischaggregat 15 ist als elektrisch angetriebener, rotierender Mischflügelwerkzeugsatz mit vertikal ausgerichteter Achse z ausgebildet. Dem Heizmischer 13 nachgeschaltet ist ein Zwischenbehälter 31 sowie daran anschließend ein Schneidverdichter 16 mit einem ebenfalls tankförmigen Behälter 17 und einem darin angeordneten Schneidwerkzeug 18 (s. Fig. 5), welches mehrere abgewinkelte Schneidkanten 19 aufweist und ebenfalls elektrisch angetrieben um eine vertikal ausgerichtete Achse z' rotiert. Dem Schneidverdichter 16 nachgeordnet ist eine Granuliereinrichtung 20. Diese Granuliereinrichtung 20 weist einen Einschneckenextruder 21 sowie eine nachgeschaltete Unterwasser-Granuliereinheit 22 auf. Alternativ hierzu kann auch eine Wasserring- oder eine Luft-Granuliereinheit zum Einsatz kommen. Der Unterwasser-Granuliereinheit 22 nachgeschaltet ist ein Silo 23 zur Lagerung des hergestellten WPC-Granulats 30. Zur WPC-Profilextrusionsherstellung wird WPC-Granulat 30 aus dem Silo 23 entnommen und im Rahmen eines Extrusionsvorgangs 25 zu einem Hohlprofil (oder auch Vollprofil) 1 in Form einer Terrassendiele weiterverarbeitet. Der Figur 4 ist zu entnehmen, dass der Schneidverdichter 16 unmittelbar dem Zwischenbehälter 31 und die Granuliereinrichtung 20 unmittelbar dem Schneidverdichter 16 nachgeschaltet ist. Das erfindungsgemäße Verfahren wird nun wie folgt betrieben:
Zunächst werden in dem Heizmischer 13 Polypropylengranulat 3 und feuchte Holzpartikel 2 mit dem Feuchtigkeitsgehalt X erwärmt und zu einer homogenen Rohmischung 26 in Form eines WPC-Agglomerates vermischt. Hierbei wird die im Heizmischer 13 zugeführte Wärme allein durch die beim Mischen erzeugte Reibungswärme bereitgestellt. Die Prozessführung im Heizmischer 13 erfolgt derart, dass der Feuchtigkeitsgehalt X' der Holzpartikel 2' in der aus dem Heizmischer 13 austretenden Rohmischung 26 innerhalb eines vordefinierten Bereiches liegt, im Ausführungsbeispiel im Bereich von X' = 0 ÷ 10 g Wasser/kg feuchtes Holz. Die Prozessführung im Heizmischer 13 kann hierbei über die Verweildauer/oder die Mischintensität eingestellt werden. Sofern die Roh-Holzpartikel 2 eine hohe Feuchtigkeit X aufweisen, ist eine lange Verweildauer und/oder eine hohe Mischintensität erforderlich, um eine ausreichende Entfeuchtung sicher zu stellen. Im Falle einer niedrigen Feuchtigkeitsbeladung kann hingegen eine kurze Verweildauer und/oder eine geringe Mischintensität eingestellt werden. Die Mischintensität kann beispielsweise über die Rotationsgeschwindigkeit bzw. die Antriebsleistung des Mischaggregates 15 und/oder über dessen axiale Position innerhalb des Mischbehälters 13 eingestellt werden. Die Prozessführung im Mischbehälter 13 kann über eine Regelung oder aber auch über eine Steuerung erfolgen. Generell liegt es im Rahmen der Erfindung, den Prozess im Heizmischer 13 derart fest einzustellen, dass in jedem Fall ein ausreichend niedriger Feuchtigkeitsgehalt X' von maximal 10 g Wasser / kg feuchtes Holz sichergestellt ist. Hierbei wird vom ungünstigsten Fall höchster Feuchtigkeitsbeladung X in den Roh-Holzpartikeln 2 ausgegangen, z.B. 100 g Wasser / kg feuchtes Holz, also 10%. Der Prozess wird dann so geführt, dass auch bei dieser Maximalbeladung X der geforderte Feuchtigkeitsgehalt X' sichergestellt ist, und zwar unabhängig von der ggf. niedrigeren tatsächlichen Beladung X, da auch eine praktisch vollständige Trocknung der Roh-Holzpartikel 2 in der Regel unproblematisch ist.

Das mit dem Heizmischer 13 erzeugte Rohmischungs-Agglomerat 26 mit definiertem Feuchtigkeitsgehalt X' der darin enthaltenen Holzpartikel 2' wird aus dem Zwischenbehälter 31 dosiert in den anschließenden Schneidverdichter 16 gefördert, in dem die Agglomerate der Rohmischung 26 zerkleinert werden. In diesem Schneidverdichter 16 erfolgt gleichzeitig eine Verdichtung der Rohmischung 26 und auch die Gewährleistung einer prozesssicheren Fütterung des Einschneckenextruders 21. Die Verdichtungs- sowie die Zerkleinerungswirkung des Schneidverdichters 16 kann wiederum über entsprechende Prozessparameter eingestellt werden, beispielsweise die Verweildauer und/oder die Rotationsgeschwindigkeit bzw. die Antriebsleistung des Schneidwerkzeugs 18. An den Schneidverdichter 16 unmittelbar angeschlossen ist der Einschneckenextruder 21, aus dem die zerkleinerte und verdichtete Mischung 28 zur nachfolgenden Unterwasser-Granuliereinheit 22 gefördert wird. Die beschriebene Einheit 29 bestehend aus Schneidverdichter 16 und Einschneckenextruder 21 ist in Figur 5 in Einzeldarstellung in einer Draufsicht dargestellt. Man erkennt das rotierende Schneidwerkzeug 18 sowie die kreisförmige Mantelfläche des Behälters 17 des Schneidverdichters 16. Ferner ist erkennbar, dass das Schneidwerkzeug 18 abgewinkelte Schneidkanten 19 aufweist (in Fig. ist nur eine Schneidkante 19 dargestellt).

Die dem Schneidverdichter 16 nachgelagerte Granuliereinrichtung 20 umfasst die Aufschmelzung der aus dem Schneidverdichter 16 austretenden, verdichteten Mischung 27 im bereits erwähnten Einschneckenextruder 21 und die anschließende Granulierung der hierdurch erhaltenen Mischung 28 in der Unterwasser-Granuliereinheit 22. Das so erhaltene Granulat 30, welches eine hohe Dichte, eine gleichmäßige Korngröße sowie einen definierten Feuchtigkeitsgehalt der darin enthaltenen Holzpartikel 2' aufweist, wird in einem nicht näher dargestellten Prozessschritt gekühlt und danach in das Silo 23 eingefüllt. Aus dem Silo 23 kann nunmehr ein homogenes WPC-Granulat 30 entnommen werden, welches genau definierte Eigenschaften hinsichtlich Dichte, Korngröße und Feuchtigkeitsgehalt sowie einen geringen Staubgehalt aufweist. Dieses homogene Granulat 30 ermöglicht einen sehr ruhigen und stabilen Profil-Extrusionsprozess 25 und damit die Herstellung eines hochwertigen WPC-Extrusionsprofils 1.

Der Zwischenbehälter 31 ist als Kühlmischer mit elektrischem Kühlaggregat und tankförmigem Kühlmischbehälter sowie darin angeordnetem, elektrisch angetriebenen Mischaggregat ausgebildet (Bestandteile des Kühlmischers sind nicht näher dargestellt). Das Kühlaggregat des Kühlmischers wird jedoch nur bei Eintritt einer Notsituation (z.B. einer zu starken Wärmeentwicklung im Heizmischer 13) zur Vermeidung von Havarien genutzt; im Normalbetrieb fungiert der Kühlmischer 31 bei ausgeschaltetem Kühlaggregat lediglich als Zwischenbehälter, z.B. als Puffer. Unabhängig von der konkreten Gestaltung des Zwischenbehälters 31 wird der Schneidverdichter 16 mit Hilfe eines (nicht dargestellten) Ausförderorgans aus dem Zwischenbehälter 31 beschickt, wobei die Dosierung geregelt und damit dem nachfolgenden Granulierprozess angepasst erfolgt.

Im Ausführungsbeispiel erfolgt der Betrieb des Heizmischers 13 batchweise, während der Schneidverdichter 16 kontinuierlich arbeitet. Die Granuliereinrichtung 20 zur Herstellung von silofähigem WPC-Granulat 30 kann ebenfalls kontinuierlich betrieben werden.

## Patentansprüche

1. Verfahren zur Herstellung eines Holz-Polymer-Verbundwerkstoffs (WPC),
- wobei zunächst in einem Heizmischer Polymermaterial und feuchte Holzpartikel erwärmt und zu einer Rohmischung vermischt werden,
- wobei die Prozessführung im Heizmischer derart erfolgt, dass der Feuchtigkeitsgehalt (X') der Holzpartikel beim Verlassen des Heizmischers innerhalb eines vordefinierten Bereiches liegt,
- wobei die Rohmischung danach einen Zwischenbehälter durchläuft, der als Kühl-mischer mit elektrischem Kühlaggregat, tankförmigem Kühlmischbehälter sowie darin angeordnetem, elektrisch angetriebenen Mischaggregat ausgebildet ist und dessen Kühlaggregat nur bei Eintritt einer Notsituation zur Vermeidung von Havarien genutzt wird, während der Kühlmischer im Normalbetrieb bei ausgeschaltetem Kühlaggregat lediglich als Puffer fungiert,
- wobei die Rohmischung danach in einem Schneidverdichter mit tankförmigem Behälter sowie mindestens einem im Behälter angeordneten, elektrisch angetriebenen Schneidwerkzeug zerkleinert wird,
- wobei die Verdichtungs- und Zerkleinerungswirkung des Schneidverdichters über die Verweildauer im Schneidverdichter und die Rotationsgeschwindigkeit sowie die Antriebsleistung des Schneidwerkzeugs eingestellt wird und
- wobei danach die Rohmischung unter Ausnutzung der im Heizmischer eingebrachten Prozesswärme zu einem Granulat weiterverarbeitet wird.

2. Verfahren nach Anspruch 1, **dadurch gekennzeichnet, dass** die Prozessführung im Heizmischer über die Verweildauer und/oder die Mischintensität eingestellt wird.

3. Verfahren nach einem der Ansprüche 1 oder 2, **dadurch gekennzeichnet, dass** zur Granulierung die Rohmischung, vorzugsweise in einem Extruder, aufgeschmolzen und unter Wasser oder als Heißabschlag granuliert wird.

4. Verfahren nach einem der Ansprüche 1 bis 3, **dadurch gekennzeichnet, dass** das Granulat gekühlt und danach in ein Lagersilo eingefüllt wird.

5. Verfahren nach einem der Ansprüche 1 bis 4, **dadurch gekennzeichnet, dass** der Feuchtigkeitsgehalt (X') der Holzpartikel beim Verlassen des Heizmischers in einem Bereich von 0 bis 20, vorzugsweise 0 bis 10 g Wasser/kg feuchtes Holz liegt.

6. Verfahren nach einem der Ansprüche 1 bis 5, **dadurch gekennzeichnet, dass** die im Heizmischer zugeführte Wärme allein durch die beim Mischen erzeugte Reibungswärme bereitgestellt wird.

7. Verfahren nach einem der Ansprüche 1 bis 6, **dadurch gekennzeichnet, dass** der Heizmischer einen tankförmigen Mischbehälter sowie mindestens ein im Mischbehälter angeordnetes, elektrisch angetriebenes Mischaggregat aufweist.

8. Verfahren nach einem der Ansprüche 1 bis 7, **dadurch gekennzeichnet, dass** das Schneidwerkzeug um eine, vorzugsweise vertikal ausgerichtete, Achse rotiert und mindestens eine, vorzugsweise gekrümmte oder abgewinkelte, Schneidkante aufweist.

9. Verfahren nach einem der Ansprüche 1 bis 8, **dadurch gekennzeichnet, dass** die Herstellung des Holz-Polymer-Verbundwerkstoffs (WPC) mit einem kontinuierlichen Verfahren oder batchweise erfolgt.

10. Vorrichtung zur Herstellung eines Holz-Polymer-Verbundwerkstoffs (WPC) mit
- einem Heizmischer (13) mit tankförmigem Mischbehälter (14) sowie darin angeordnetem Mischaggregat (15) zur Entfeuchtung von Holzpartikeln (2) und Vermischung dieser Holzpartikel (2) mit einem Polymermaterial (3) zu einer Rohmischung (26),
- einem dem Heizmischer (13) nachgeschalteten Schneidverdichter (16) mit einem tankförmigen Behälter (17) und mindestens einem darin angeordneten Schneidwerkzeug (18) zur Zerkleinerung und Verdichtung der Rohmischung (26),
- einer dem Schneidverdichter (16) nachgeschalteten Granuliereinrichtung (20) zur Granulierung der mit dem Schneidverdichter (16) erzeugten Mischung (27) und
- einem zwischen Heizmischer (13) und Schneidverdichter (16) vorgesehenen Zwischenbehälter (31), der zur Beherrschung von Notfallsituationen als Kühlmischer mit elektrischem Kühlaggregat, tankförmigem Kühlmischbehälter sowie darin angeordnetem, elektrisch angetriebenen Mischaggregat ausgebildet ist.

11. Vorrichtung nach Anspruch 10, **dadurch gekennzeichnet, dass** die Granuliereinrichtung (20) einen, vorzugsweise lediglich eine Schnecke aufweisenden, Extruder (21) mit nachgeschalteter Luft-, Wasserring- oder Unterwasser-Granuliereinheit (22) aufweist.

12. Vorrichtung nach Anspruch 10 oder 11, **dadurch gekennzeichnet, dass** der Schneidverdichter (16) unmittelbar dem Zwischenbehälter (31) und/oder die Granuliereinrichtung (20) unmittelbar dem Schneidverdichter (16) nachgeschaltet ist.

## Claims

1. A method for manufacturing a wood-polymer composite (WPC),
- wherein polymer material and moist wood particles are first heated in a heating mixer and mixed to form a crude mixture,
- wherein the process control in the heating mixer takes place in such a way that the moisture content (X') of the wood particles on leaving the heating mixer lies within a predefined range,
- wherein the crude mixture then passes through an intermediate vessel, which is in the form of a cooling mixer with an electric cooling unit, tank-shaped cooling mixer vessel and electrically driven mixing unit disposed therein and the cooling unit of which is used only to avoid damage when an emergency situation occurs, while during normal operation the cooling mixer acts only as a buffer with the cooling unit switched off,
- wherein the crude mixture is then comminuted in a cutter-compactor having a tank-shaped vessel and at least one electrically driven cutting tool disposed in the vessel,
- wherein the compacting and comminuting action of the cutter-compactor is adjusted by means of the residence time in the cutter-compactor and the rotational speed as well as the driving power of the cutting tool and
- wherein the crude mixture is then further processed into pellets utilising the process heat introduced in the heating mixer.

2. The method according to claim 1, **characterised in that** the process control in the heating mixer is adjusted by means of the residence time and / or the mixing intensity.

3. The method according to one of claims 1 or 2, **characterised in that**, for the purpose of pelletising, the crude mixture is melted, preferably in an extruder, and pelletised under water or hot-cut pelletised.

4. The method according to one of claims 1 to 3, **characterised in that** the pellets are cooled and then filled into a storage silo.

5. The method according to one of claims 1 to 4, **characterised in that** the moisture content (X') of the wood particles on leaving the heating mixer is in a range of 0 to 20, preferably 0 to 10 g water/kg moist wood.

6. The method according to one of claims 1 to 5, **characterised in that** the heat supplied in the heating mixer is provided solely by the frictional heat generated during mixing.

7. The method according to one of claims 1 to 6, **characterised in that** the heating mixer comprises a tank-shaped mixing vessel and at least one electrically driven mixing unit disposed in the mixing vessel.

8. The method according to one of claims 1 to 7, **characterised in that** the cutting tool rotates about a preferably vertically aligned axis and comprises at least one, preferably curved or angled, cutting edge.

9. The method according to one of claims 1 to 8, **characterised in that** the manufacture of the wood-polymer composite (WPC) takes place by a continuous method or batchwise.

10. A device for the manufacture of a wood-polymer composite (WPC), comprising
- a heating mixer (13) with a tank-shaped mixing vessel (14) and, disposed therein, a mixing unit (15) for dehumidifying wood particles (2) and mixing these wood particles (2) with a polymer material (3) to form a crude mixture (26),
- downstream of the heating mixer (13) a cutter-compactor (16) having a tank-shaped vessel (17) and at least one cutting tool (18) disposed therein for comminuting and compacting the crude mixture (26),
- downstream of the cutter-compactor (16) a pelletising apparatus (20) for pelletising the mixture (27) produced by the cutter-compactor (16) and
- an intermediate vessel (31) provided between heating mixer (13) and cutter-compactor (16), which intermediate vessel, to control emergency situations, is in the form of a cooling mixer with an electric cooling unit, tank-shaped cooling mixer vessel and electrically driven mixing unit disposed therein.

11. The device according to claim 10, **characterised in that** the pelletising apparatus (20) comprises an extruder (21), preferably comprising only a single screw, with a downstream air, water-ring or underwater pelletising unit (22).

12. The device according to claim 10 or 11, **characterised in that** the cutter-compactor (16) is directly downstream of the intermediate vessel (31) and/or the pelletising apparatus (20) is directly downstream of the cutter-compactor (16).

## Revendications

1. Procédé de fabrication d'un matériau composite bois-polymère (WPC)
- dans lequel de la matière polymère et des particules de bois humides sont d'abord échauffées dans un mélangeur chauffant et mélangées en un mélange brut,
- dans lequel la conduite du processus dans le mélangeur chauffant est réalisée de manière à ce que la teneur en humidité (X') des particules de bois, à leur sortie du mélangeur chauffant, soit située dans une plage prédéfinie,
- dans lequel le mélange brut traverse ensuite un réservoir intermédiaire qui est réalisé comme mélangeur refroidisseur muni d'une unité de refroidissement électrique, d'un réservoir mélangeur de refroidissement en forme de cuve ainsi que d'une unité de mélange à entraînement électrique, disposée dedans, et dont l'unité de refroidissement est utilisée seulement à l'apparition d'une situation d'urgence dans le but d'éviter des avaries, alors que le mélangeur refroidisseur, en fonctionnement normal avec l'unité de refroidissement arrêtée, sert uniquement de tampon,
- dans lequel le mélange brut est ensuite broyé dans un compacteur-découpeur muni d'un réservoir en forme de cuve ainsi que d'au moins un outil de coupe à entraînement électrique, disposé dans le réservoir,
- dans lequel l'action de compactage et de broyage du compacteur-découpeur est réglée pour la durée de séjour dans le compacteur-découpeur et dans lequel la vitesse de rotation ainsi que la puissance d'entraînement de l'outil de coupe sont réglées, et
- dans lequel le mélange brut, avec exploitation de la chaleur du processus amenée dans le mélangeur chauffant, est transformé en granulés.

2. Procédé selon la revendication 1, **caractérisé en ce que** la conduite du processus dans le mélangeur chauffant est réglée pour la durée de séjour et/ou l'intensité de mélange.

3. Procédé selon la revendication 1 ou 2, **caractérisé en ce que** pour la granulation, le mélange brut est mis en fusion, de préférence dans une extrudeuse, et granulé par voie humide ou en tant que détachement à chaud.

4. Procédé selon l'une quelconque des revendications 1 à 3, **caractérisé en ce que** les granulés sont refroidis et ensuite remplis dans un silo de stockage.

5. Procédé selon l'une quelconque des revendications 1 à 4, **caractérisé en ce que** la teneur en humidité (X') des particules de bois, à leur sortie du mélangeur chauffant, est située dans une plage de 0 à 20, de préférence de 0 à 10 g d'eau/kg de bois humide.

6. Procédé selon l'une quelconque des revendications 1 à 5, **caractérisé en ce que** la chaleur amenée dans le mélangeur chauffant est fournie uniquement par la chaleur de frottement produite lors du malaxage.

7. Procédé selon l'une quelconque des revendications 1 à 6, **caractérisé en ce que** le mélangeur chauffant présente un réservoir mélangeur en forme de cuve ainsi qu'au moins une unité de mélange à entraînement électrique, disposée dans le réservoir mélangeur.

8. Procédé selon l'une quelconque des revendications 1 à 7, **caractérisé en ce que** l'outil de coupe tourne autour d'un axe orienté de préférence verticalement et présente au moins un bord de coupe de préférence arqué ou angulaire.

9. Procédé selon l'une quelconque des revendications 1 à 8, **caractérisé en ce que** la fabrication du matériau composite bois-polymère (WPC) est réalisée à l'aide d'un procédé continu ou par lots.

10. Dispositif de fabrication d'un matériau composite bois-polymère (WPC) comprenant
- un mélangeur chauffant (13) muni d'un réservoir de mélange (4) en forme de cuve, ainsi que d'une unité de mélange (15) disposée dedans, destinée à déshumidifier les particules de bois (2) et à mélanger ces particules de bois (2) avec une matière polymère (3) pour obtenir un mélange brut (26),
- un compacteur-découpeur (16) installé en aval du mélangeur chauffant (13), muni d'un réservoir (17) en forme de cuve et d'au moins un outil de coupe (18) disposé dedans pour le broyage et le compactage du mélange brut (26),
- un dispositif de granulation (20) installé en aval du compacteur-découpeur (16), destiné à granuler le mélange (28) produit avec le compacteur-découpeur (16), et
- un réservoir intermédiaire (31) ménagé entre le mélangeur chauffant (13) et le compacteur-découpeur (16), lequel est réalisé pour maîtriser des situations d'urgence en tant que mélangeur de refroidissement muni d'une unité de refroidissement électrique, d'un réservoir mélangeur de refroidissement en forme de cuve ainsi que d'une unité de mélange à entraînement électrique, disposée dedans.

11. Dispositif selon la revendication 10, **caractérisé en ce que** le dispositif de granulation (20) présente une extrudeuse (21) présentant de préférence uniquement une vis sans fin, munie d'une unité de granulation (22) à air, à anneau d'eau ou à eau, installée en aval.

12. Dispositif selon la revendication 10 ou 11, **caractérisé en ce que** le compacteur-découpeur (16) est installé directement en aval du réservoir intermédiaire (31) et/ou **en ce que** le dispositif de granulation (20) est installé directement en aval du compacteur-découpeur (16).
